(19) Europäisches Patentamt
European Patent Office
Office européen des brevets

(11) EP 0 733 474 B1

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(51) Int Cl.7: **B32B 27/20**, B32B 27/32

(21) Anmeldenummer: **96103281.0**

(22) Anmeldetag: **04.03.1996**

(54) **Siegelfähige Polyolefin-Mehrschichtfolie mit partikelförmigen Hohlkörpern, Verfahren zu ihrer Herstellung und Ihre Verwendung**

Sealable polyolefin laminated film with hollow particles, method of making it and its use

Feuille multicouche scellable en polyoléfine avec des particles creuses, procédé pour sa fabrication, et utilisation

(84) Benannte Vertragsstaaten:
**BE DE ES FR GB IT NL**

(30) Priorität: **20.03.1995 DE 19510086**

(43) Veröffentlichungstag der Anmeldung:
**25.09.1996 Patentblatt 1996/39**

(73) Patentinhaber: **Ticona GmbH**
**65451 Kelsterbach (DE)**

(72) Erfinder: **Schreck, Michael Dr.**
**D-60529 Frankfurt (DE)**

(56) Entgegenhaltungen:
**EP-A- 0 027 586**
**EP-A- 0 367 613**
**EP-A- 0 435 626**
**EP-A- 0 610 816**
**EP-A- 0 695 778**
**US-A- 4 701 369**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 733 474 B1

Printed by Jouve, 75001 PARIS (FR)

## Beschreibung

Die Erfindung betrifft eine orientierte Folie aus Polyolefin, die mindestens eine polyolefinische Basisschicht und eine polyolefinische siegelfähige Deckschicht enthält. Die Folien zeichnen sich durch einen hohen Glanz und einen niedrigen Reibungskoeffizienten aus. Die Erfindung betrifft weiterhin die Verwendung partikelförmiger Hohlkörper.

Im Stand der Technik sind Folien mit einem niedrigen Reibungskoeffizienten beschrieben. Die Anforderungen an die Verarbeitungsfähigkeit der Folien und deren Lauffähigkeit auf automatischen Maschinen sind im Laufe der Jahre ständig gestiegen. Aus diesem Grund werden immer niedrigere Reibungskoeffizienten gefordert, wobei heute der Begriff "niedrig" Reibungswerte einer Größenordnung von 0,3 bis 0,1 umfaßt, wohingegen vor einigen Jahren eine Reibung von 0,4 bis 0,5 durchaus als ausgezeichnet niedrig galt.

Die DE-A-20 01 032 beschreibt Folien aus verschiedenen thermoplastischen Kunststoffen, deren Gleiteigenschaften durch Zusatz von Carbonsäureamiden und Antiblockmitteln verbessert sind. Da in die Deckschichten alleine keine ausreichende Menge an Gleitmittel eingearbeitet werden kann, wird die zusätzliche Einarbeitung der Amide in die Basisschicht empfohlen. Diese Folien haben einen Reibungskoeffizienten im Bereich von 0,4 bis 0,8 und entsprechen damit nicht mehr den heutigen Qualitätsanforderungen.

Die US-A-4,117,193 beschreibt mehrschichtige Folien aus einer Polypropylen-Basisschicht, welche ein Gleitmittel und ein Antiblockmittel und ein Antistatikmittel enthält. Die Deckschicht dieser Folien besteht aus einem Polymerblend und enthält zusätzlich ein Gleitmittel und ein Antiblockmittel. Das Polymerblend besteht aus einem Ethylen-Butylen-Copolymer und einem polyolefinischen Harz wie HDPE oder LDPE. Es ist beschrieben, daß die mangelhaften Gleiteigenschaften der Folien durch den Zusatz von Gleit- und Antiblockmitteln alleine nicht genügend verbessert werden können. Aus diesem Grund wird die Deckschicht durch Zusatz von HDPE oder LDPE in Kombination mit einem Gleit- und Antiblockmittel modifiziert. Die Reduktion des Reibungskoeffizienten ist nach den Beispielen und Vergleichsbeispielen wesentlich auf den Zusatz von HDPE zurückzuführen. Reine Copolymer-Deckschichten mit gleicher Additivzusammensetzung weisen Reibungskoeffizienten von 0,7 bis 0,8 auf. Die Folien kombinieren hervorragende Reibungskoeffizienten mit einer guten Bedruckbarkeit. Sie sind jedoch durch den Zusatz des reibungsvermindernden poiyolefinischen Harzes in der Trübung und im Glanz stark verbesserungsbedürftig.

Die EP-A-0 402 100 beschreibt Polypropylenfolien, die 0,01 bis 0,5 Gew.-% eines sphärischen $SiO_2$ und 0,3 bis 5 Gew.-% eines Hydroxy-Fettsäure-Glycerids enthalten. Diese Erfindung betrifft einschichtige und mehrschichtige Folien. Mehrschichtige Ausführungsformen weisen sowohl in der Deckschicht als auch in der Basisschicht die Kombination von $SiO_2$ und Glycerid auf. Es ist beschrieben, daß die ausgewählten Mengen an $SiO_2$ und Glycerid wesentlich für die vorteilhaften Eigenschaften der Folien sind und Abweichungen von diesen Bereichen nicht mehr zu dem gewünschten Ergebnis führen. Die Folien zeichnen sich durch eine gute Transparenz, Gleitfähigkeit und Metallhaftung aus. Sie zeigen jedoch nach längerer Lagerzeit einen Belag auf der Oberfläche, der das Aussehen der Folien beeinträchtigt. Dieser Effekt ist auch als "blooming" bekannt und wird durch die Migration bestimmter Additive, insbesondere der Glyceride, an die Oberfläche der Folien verursacht.

Die EP-A-0 182 463 beschreibt eine mehrschichtige Folie, welche 0,05 bis 0,2 Gew.-% tertiäres aliphatisches Amin in der Basisschicht und eine Kombination von Siliconöl und $SiO_2$ in der siegelfähigen Deckschicht enthält. Nach der Beschreibung erhält man durch das überraschende Zusammenwirken von $SiO_2$, Siliconöl und Amin in Verbindung mit einer ausgewählten Deckschichtdicke von kleiner als 0,8 µm Folien mit Reibungskoeffizienten von 0,3 und kleiner. Trotz dieses hervorragenden Reibungskoeffizienten sind die Verarbeitungseigenschaften der Folie mangelhaft. Sie ist insbesondere nicht bedruckbar und daher für viele Anwendungen nicht geeignet.

Die EP-A-0 143 130 offenbart Folien, die ein Carbonsäureamid in der Basisschicht und ebenfalls die Kombination von Siliconöl und $SiO_2$ in der Deckschicht enthalten. Ähnlich wie in der oben erwähnten EP-A-0 182 463 wird eine synergistische Wirkung der drei ausgewählten Komponenten auf den Reibungskoeffizienten beschrieben. Auch diese Folien sind trotz ihrer vorteilhaften Gleitfähigkeit mangelhaft in der Verarbeitung. Auch ihnen fehlt die wichtige Eigenschaft Bedruckbarkeit.

Die EP-A-0 242 055 beschreibt die Verwendung eines nicht schmelzbaren, Organosiloxanharzpulvers mit einer dreidimensionalen Netzstruktur als Antiblockmittel in Folien. Sowohl das Siliconharz als auch das Propylenpolymer werden in Form eines Pulvers eingesetzt, welches aus Teilchen mit einer nahezu kugelförmigen Gestalt besteht, wobei diese Teilchenform durch eine entsprechende Gleichung für den tatsächlichen sphärischen Grad charakterisiert wird. Die Folien sollen gegenüber dem Stand der Technik bezüglich ihrer Transparenz, Antiblockeigenschaften, Gleitfähigkeit und bezüglich ihres Aussehens verbessert sein. Die Propylen-Antiblockmittel-Mischung kann auch als Deckschichtmaterial für coextrudierte Mehrschichtfolien eingesetzt werden. Diese coextrudierten Mehrschichtfolien sind jedoch bezüglich ihrer Transparenz und in ihren Glanzwerten noch verbesserungsbedürftig, insbesondere wenn die Deckschichten in üblichen Schichtdicken von über 0,5 µm aufgebracht werden. Darüber hinaus ist dieses Antiblockmittel sehr viel teurer als herkömmliche Antiblockmittel.

Die deutsche Patentanmeldung P 43 06 154.0 beschreibt die Verwendung eines organisch beschichteten $SiO_2$ als Antiblockmittel in siegelfähigen Folien. Der Reibungskoeffizient und das Verarbeitungsverhalten der Folie sind

verbessert. Diese Schrift macht keine Aussage über die räumliche Form der Antiblockteilchen.

Die EP-A-0 353 368 beschreibt die Verwendung des in der EP-A-0 242 055 beschriebenen Siloxanharzpulvers in Verbindung mit einem Hydroxyfettsäureglycerids. Diese Folien eignen sich besonders gut für Vakuumbedampfungen, sind jedoch bezüglich Glanz und Transparenz sehr mangelhaft.

Aus der älteren EP-A-0 695 778, der EP-A-0 435 626 und der US-A-4,701,369 sind Folien bekannt, die Vakuolen enthalten und bei denen zur Bildung der Vakuolen Partikel eingesetzt wurden.

In Anwendung der bekannten Lehren hat sich gezeigt, daß bekannte Antiblockmittel teilweise nachteilige Auswirkungen auf bestimmte Folieneigenschaften haben. Durch das Antiblockmittel werden die Transparenz und der Glanz der Folie beeinträchtigt. Die Verbesserung der Reibung geht im allgemeinen mit einer Erhöhung der Oberflächenrauhigkeit einher. $SiO_2$ als Antiblockmittel führt bei der Herstellung der Folien zu Ablagerungen an der Düsenlippe und zu Abrieb auf den Walzen. Dadurch müssen die Düsenlippe und die Walzen häufig gereinigt werden, da die Folie sonst während der Produktion schlecht läuft und die Ablagerungen an der Düsenlippe zu einer Streifenbildung auf der Folie führen. Zusätzlich treten Probleme bei der Coronabehandlung auf.

An den mit $SiO_2$-Abrieb behafteten Stellen der Walze schlägt die Coronabehandlung durch und führt zum unerwünschten sogenannten Rückseiteneffekt, wodurch beim Weiterverarbeiten der Folie wie z. B. Bedrucken oder Metallisieren reklamationsfähige Fehlstellen auftreten.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die sich durch eine Kombination der folgenden Eigenschaften auszeichnet:

- einen hohen Glanz
- eine niedrige Trübung bei transparenten Basisschichten
- ein niedriger Reibungskoeffizient
- eine niedrige Oberflächenrauhigkeit

Die der Erfindung zugrundeliegende Aufgabe wird gelöst durch eine Mehrschichtfolie der eingangs genannten Gattung, deren kennzeichnendes Merkmal darin besteht, daß die Deckschicht partikelförmige Hohlkörper als Antiblockmittel enthält, die im wesentlichen aus Polymer bestehen, das mit dem Polyolefin der Deckschicht inkompatibel ist.

Die Basisschicht der erfindungsgemäßen Mehrschichtfolie enthält im wesentlichen ein Polyolefin, vorzugsweise ein Propylenpolymer, und gegebenenfalls weitere zugesetzte Additive in jeweils wirksamen Mengen. Im allgemeinen enthält die Basisschicht mindestens 50 Gew.-%, vorzugsweise 75 bis 100 Gew.-%, insbesondere 90 bis 100 Gew.-%, des Propylenpolymeren.

Das Propylenpolymere enthält 90 bis 100 Gew.-%, vorzugsweise 95 bis 100 Gew.-%, insbesondere 98 bis 100 Gew.-%, Propyleneinheiten und besitzt einen Schmelzpunkt von 120 °C oder höher, vorzugsweise 150 bis 170 °C und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und/oder anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Im allgemeinen kann die Basisschicht Gleitmittel, Antistatika, Stabilisatoren und/oder Neutralisationsmittel in jeweils wirksamen Mengen sowie gegebenenfalls Kohlenwasserstoffharz enthalten.

In einer weißen oder opaken bzw. weißlopaken Ausführungsform enthält die Basisschicht zusätzlich Pigmente oder vakuoleniniziierende Teilchen oder eine Kombination aus diesen. Solche Folien haben eine Lichtdurchlässigkeit nach ASTM-D 1033-77 von höchstens 70 %, vorzugsweise von höchstens 50 %.

Pigmente umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm. Die Basisschicht enthält Pigmente im allgemeinen in einer Menge von 1 bis

25 Gew.-%, insbesondere 2 bis 20 Gew.-%, bevorzugt 5 bis 15 Gew.-%, jeweils bezogen auf die Basisschicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Opake Ausführungsformen der Folien enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 1 bis 6 µm, vorzugsweise 1,5 bis 5 µm. Die Basisschicht enthält vakuoleniniziierende Teilchen im allgemeinen in einer Menge von 1 bis 25 Gew.-%.

Übliche vakuoleniniziierende Teilchen der Basisschicht sind organische und/oder anorganische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid - bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, Cycloolefincopolymere, halogenierte organische Polymere, wobei Polyester wie beispielsweise Polybutylenoder Polyethylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Weiß/opake Folien, welche mit vakuoleniniziierenden Teilchen und mit Pigment ausgerüstet sind, enthalten die vakuoleniniziierenden Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%.

Die Dichte der opaken bzw. weißen Folien kann innerhalb weiter Grenzen variieren und hängt von der Art und der Menge der Füllstoffe ab. Die Dichte liegt im allgemeinen im Bereich von 0,4 bis 1,1 g/cm$^3$. Pigmentierte Folien haben eine Dichte in der Größenordnung von 0,9 g/cm$^3$ oder darüber, vorzugsweise im Bereich von 0,9 bis 1,1 g/cm$^3$. Folien, welche nur vakuoleniniziierende Teilchen enthalten, haben eine Dichte von kleiner 0,9 g/cm$^3$. Für Verpackungsfolien mit einem Gehalt an vakuoleniniziierenden Teilchen von 2 bis 5 Gew.-% liegt die Dichte im Bereich von 0,6 bis 0,85 g/cm$^3$. Für Folien mit einem Gehalt an vakuoleniniziierenden Teilchen von 5 bis 14 Gew.-% liegt die Dichte im Bereich von 0,4 bis 0,8 g/cm$^3$. Folien, welche Pigmente und vakuoleniniziierende Teilchen enthalten, haben eine Dichte im Bereich von 0,5 bis 0,85 g/cm$^3$, je nach Verhältnis von Pigmentgehalt zu Gehalt an vakuoleniniziierenden Teilchen.

Die erfindungsgemäße Mehrschichtfolie kann gegebenenfalls (eine) weitere zwischen der Basis- und der Deckschicht aufgebrachte Zwischenschicht/en umfassen. Diese gegebenenfalls vorhandene/n Zwischenschicht/en enthält/enthalten im wesentlichen Propylenpolymere oder Polypropylenmischungen, wie sie vorstehend für die Basisschicht beschrieben wurden. Grundsätzlich können die Basisschicht und die Zwischenschicht/en aus gleichen oder verschiedenen Propylenpolymeren bzw. Mischungen aufgebaut sein. Die Schmelzflußindices der Polymeren für die Kern- und Zwischenschicht/en sollen möglichst gleich groß sein. Gegebenenfalls kann der MFI der Zwischenschicht/en etwas höher liegen, wobei eine Differenz von 20 % nicht überschritten werden soll. Gegebenenfalls können den Zwischenschichten Additive in jeweils wirksamen Mengen zugesetzt werden.

In einer bevorzugten Ausführungsform der erfindungsgemäßen Folie wird das Propylenpolymere der Basisschicht und/oder der Zwischenschicht peroxidisch abgebaut.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids
$MFI_2$ = Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die erfindungsgemäße Polyolefinfolie umfaßt weiterhin mindestens eine siegelfähige Deckschicht. Diese Deckschicht enthält im wesentlichen siegelfähige Polymere aus Olefinen mit 2 bis 10 Kohlenstoffatomen und partikelförmige Hohlkörper aus Polymer sowie gegebenenfalls weitere Additive in jeweils wirksamen Mengen. Im allgemeinen enthält die Deckschicht 70 bis < 100 Gew.%, vorzugsweise 75 bis < 100 Gew.-%, insbesondere 90 bis 99,5 Gew.-%, der siegelfähigen olefinischen Polymere.

Beispiele für derartige olefinische Polymere sind ein Copolymer von Ethylen und Propylen oder Ethylen und Butylen-1 oder Propylen und Butylen-1 oder

ein Terpolymer von Ethylen und Propylen und Butylen-1 oder
eine Mischung aus zwei oder mehreren der genannten Homo-, Co- und Terpolymeren oder ein Blend aus zwei oder mehreren der genannten Homo-, Co- und Terpolymeren, gegebenenfalls gemischt mit einem oder mehreren der genannten Homo-, Co- und Terpolymeren,
wobei insbesondere statistische Ethylen-Propylen-Copolymere mit einem Ethylengehalt von 1 bis 10 Gew.-%, bevorzugt 2,5 bis 8 Gew.-%, oder statistische Propylen-Butylen-1-Copolymere mit einem Butylengehalt von 2 bis 25 Gew.-%, bevorzugt 4 bis 20 Gew.-%, jeweils bezogen auf das Gesamtgewicht des Copolymeren, oder
statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 2 bis 20 Gew.-%, bevorzugt 4 bis 20 Gew.-%, jeweils bezogen auf das Gesamtgewicht des Terpolymeren, oder
ein Blend aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Polymerblends, bevorzugt sind.

Die vorstehend beschriebenen Co- und Terpolymeren weisen im allgemeinen einen Schmelzflußindex von 1,5 bis 30 g/10 min, vorzugsweise von 3 bis 15 g/10 min, und einen Schmelzpunkt im Bereich von 120 bis 140 °C auf. Das vorstehend beschriebene Blend aus Co- und Terpolymeren hat im allgemeinen einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

Erfindungsgemäß enthält die siegelfähige Deckschicht partikelförmige Hohlkörper als Antiblockmittel aus inkompatiblem Polymer im allgemeinen in einer Menge von maximal 5 Gew.-%, vorzugsweise 0,001 bis 3 Gew.-%, insbesondere 0,002 bis 1 Gew.-%, bezogen auf das Gewicht der Deckschicht.

Unter partikelförmigen Hohlkörpern aus inkompatiblen Polymeren werden im Sinne der vorliegenden Erfindung solche Teilchen verstanden, bei denen eine im wesentlichen geschlossene Polymerhaut ein inneres gas- oder luftgefülltes Volumen umhüllt. Das eingeschlossene Volumen und die Form der Teilchen hängen von dem verwendeten inkompatiblen Polymeren und dem Herstellverfahren der Partikel ab. Die Größe des eingeschlossenen Volumens und die Gestalt der Teilchen können grundsätzlich innerhalb weiter Grenzen variieren.

Im allgemeinen weisen die partikelförmigen Hohlkörper eine Form auf, welche sich von runden Hohlkörpern mit konstantem Durchmesser ableitet. Diese kugel- oder ellipsenartigen Grundformen sind im allgemeinen durch nach innen gewölbte Teilbereiche der Oberfläche mehr oder weniger stark deformiert (sogenannte Einstülpungen oder Einwölbungen oder "konkave Oberflächensegmente"). Üblicherweise weist ein einzelnes Teilchen 0 bis 20, vorzugsweise

1 bis 15, insbesondere 2 bis 10, solcher konkaven Oberflächensegmente auf. Die einzelnen konkaven Oberflächensegmente können mehr oder minder stark eingestülpt sein, so daß das Teilchen in einem Grenzfall mit sehr wenigen und wenig ausgeprägten Einstülpungen im wesentlichen eine hohle Kugel ist, welche nahezu keine konkaven Oberflächensegmente mehr aufweist. Je höher die Anzahl der konkaven Oberflächensegmente und je ausgeprägter das Maß der Einwölbungen ist, umso kleiner ist das von der Polymerhülle eingeschlossene Volumen, so daß sich in einem zweiten Grenzfall die Innenseiten der Polymerhaut berühren und das eingeschlossene Volumen gegen null geht. Man bezeichnet diesen Grenzfall auch als ein vollständig kollabiertes Teilchen, welches dann im wesentlichen nur aus der Polymerhaut besteht. Diese kollabierten Teilchen besitzen eine sehr stark gefaltete Oberfläche ohne scharfkantige Übergänge, aber mit sehr unregelmäßig geformten Einstülpungen. Die Richtungsänderungen der Oberfläche betragen dann mehr als 160° auf 0,1 µm Längenabmessung auf der Oberfläche.

Im allgemeinen sind die konkaven Oberflächensegmente der Partikel so weit eingewölbt, daß die Einwölbung mindestens 10 % des größten Abstands zweier Oberflächenpunkte des Partikels (maximaler Teilchendurchmesser) beträgt. Bevorzugt sind die Einwölbungen so ausgeprägt, daß sie 20 bis 95 %, insbesondere 30 bis 70 %, des maximalen Teilchendurchmessers betragen.

Die Verteilung der Formen in einer Charge von Partikeln kann in weiten Grenzen variieren, d. h. die Partikel weisen im allgemeinen keine einheitliche Geometrie auf. Als günstig haben sich Chargen erwiesen, in denen mindestens 5 %, bevorzugt 10 bis 100 %, insbesondere 60 bis 100 %, der Partikel mindestens ein konkaves Oberflächensegment, vorzugsweise 1 bis 10 derartige Segmente, aufweisen. Bevorzugt sind Chargen mit Partikeln, die so stark ausgeprägte Einwölbungen besitzen, daß sich die Innenseiten der Polymerhaut berühren und das eingeschlossene Volumen gegen null geht. Die Verteilung der Formen kann durch rasterelektronische Aufnahmen (REM) der Partikel bestimmt werden.

Die Partikel können eine glatte oder rauhe Oberfläche aufweisen. Dieses Merkmal läßt sich beispielsweise durch elektronenmikroskopische Untersuchungen, insbesondere durch Rasterelektronenmikroskopie (REM), bestimmen. Dazu werden die Partikel nach Standardmethoden für die Elektronenmikroskopie vorbereitet und kontrastiert. Als Kontrastmittel für REM-Aufnahmen haben sich Metallaufdampfungen, z. B. mit Gold, bewährt. Glatte Oberflächen von Partikeln erscheinen auf den REM-Aufnahmen als homogene Flächen mit weitgehend konstantem Grauton. Rauhigkeiten durch Störungen der Oberfläche erkennt man an unterschiedlichen Grautönen. Die Störungen haben einen Abstand von der mittleren Oberfläche der Partikel von mehr als 100 nm und sind damit um Grössenordnungen kleiner als die Unebenheiten durch die konkaven Oberflächensegmente.

Der Teilchendurchmesser der partikelförmigen Hohlkörper kann innerhalb weiter Bereiche variieren. Die bevorzugt verwendeten partikelförmigen Hohlkörper haben einen maximalen Teilchendurchmesser, der bei mindestens 90 % der Partikel im Bereich von 0,2 bis 20 µm, bevorzugt 1 bis 15 µm, insbesondere 2 bis 10 µm, liegt.

Die Partikelgrößen und deren Verteilung wird mittels Photonenkorrelationsspektroskopie (PCS), Aerosolspektroskopie und/oder Elektronenmikroskopie (REM) bestimmt. Einzelheiten zu diesen Bestimmungsmethoden sind in J. P. Fischer "Progress in Kolloid and Polymer Science", 77, Seite 180 - 194, 1988 beschrieben. Die Schüttdichte der partikelförmigen Hohlkörper beträgt höchstens 60 %, vorzugsweise höchstens 30 %, insbesondere höchstens 15 %, der Dichte des zur Herstellung der partikelförmigen Hohlkörper verwendeten Polymeren.

Die partikelförmigen Hohlkörper bestehen im wesentlichen aus einem Polymeren, welches mit dem Polyolefin der Deckschicht inkompatibel ist. Inkompatibel heißt auch unverträglich und bedeutet, daß dieses inkompatible Polymere mit dem Polyolefin nicht mischbar ist und daher in einer separaten Phase vorliegt, die in rasterelektronischen oder lichtmikroskopischen Aufnahmen leicht zu erkennen ist. Eine Mischung aus zwei inkompatiblen Polymeren weist bei der Aufnahme eines DSC zwei getrennte Peaks auf, sofern die beiden Polymeren nicht zufällig eine nahezu gleiche Glastemperatur bzw. einen nahezu gleichen Schmelzpunkt haben.

Zur Herstellung der Hohlkörper können grundsätzlich alle Polymeren eingesetzt werden, die mit dem jeweiligen verwendeten Matrixpolymeren inkompatibel sind und in einem Sprühtrocknungsverfahren angewendet werden können, d. h. sie sollten beispielsweise in einem für den jeweiligen Prozeß geeigneten Lösungsmittel hinreichend löslich sein. Die Glastemperatur $T_G$ bzw. die Erweichungstemperatur $T_V$ oder der Schmelzpunkt $T_M$ des inkompatiblen Polymeren sollte im allgemeinen so hoch liegen, daß das Teilchen bei den Temperaturbedingungen, die während der Folienherstellung üblich sind, weitgehend formstabil bleibt, d. h. die $T_G$ bzw. $T_M$ sollte mindestens 5 °C, vorzugsweise 15 bis 180 °C, insbesondere 15 bis 150 °C, über der Mindesttemperatur liegen, bei der die Extrusion des Matrixpolymeren noch möglich ist. Übliche Extrusionstemperaturen bei der Herstellung von Folien aus Polyolefin liegen im Bereich von 220 bis 400 °C, vorzugsweise im Bereich von 230 bis 360 °C.

Bei der Verwendung von Polypropylen als Matrixpolymer wird üblicherweise bei einer Temperatur von 220 bis 290 °C extrudiert. Die $T_G$ des mit Polypropylen unverträglichen Polymeren sollte daher im Bereich von 225 bis 390 °C, vorzugsweise 235 bis 360 °C, liegen.

Im einzelnen sind die folgenden inkompatiblen Polymeren, die die obengenannten Bedingungen erfüllen, für die Herstellung der Hohlkörper besonders geeignet: Syndiotaktisches Polystyrol, Polyphenylensulfid (PPS), Polyetherketone (PEK), Polyamide (PA), Polyethylenterephthalat (PET), Polybutylenterephthalat (PBT), Polyaramide, Polyimide, halogenierte Polymere, amorphe und teilkristalline Cycloolefinpolymere und Polymere, welche durch ringöffnende Polymerisation hergestellt werden (Methathesepolymerisation).

Die vorstehend genannten Polymeren sind entweder handelsübliche Produkte, die in der kommerziell erhältlichen Form zur Herstellung der Hohlkörper direkt verwendet werden können, beispielsweise ®Ultramid der BASF AG (PA), ®Ultradur A der BASF AG (PET), ®Celanex der Hoechst AG (PBT) oder ®Fortron der Hoechst AG (PPS), oder die entsprechenden Polymeren sowie Verfahren zu ihrer Herstellung sind bereits bekannter Stand der Technik. Im einzelnen sind geeignete amorphe Cycloolefinpolymere in EP-A-0 156 464, EP-A-0 286 164, EP-A-0 475 893 und DE-A-40 36 264 beschrieben. Teilkristalline Cycloolefinpolymere und Verfahren zu ihrer Herstellung offenbart EP-A-0 503 422. Eine entsprechende Schrift für Polynorbornene ist US-A-3,330,815. Methathesepolymere sind in EP-A-0 159 464 beschrieben.

Bevorzugte Polymere für die Herstellung der Hohlkörper sind Polyethylenterephthalate und Polybutylenterephthalate sowie amorphe und teilkristalline Cycloolefinpolymere.

Cycloolefinpolymere sind aus einem oder mehreren Cycloolefinen aufgebaut, wobei als Cycloolefine im allgemeinen substituierte und unsubstituierte Cycloalkene und/oder Polycycloalkene wie beispielsweise Bi-, Tri- oder Tetracycloalkene eingesetzt werden. Die Cycloolefinpolymeren können auch verzweigt sein. Derartige Produkte können Kamm- oder Sternstruktur aufweisen.

Besonders bevorzugt sind Cycloolefincopolymere, die mindestens ein polycyclisches Olefin der folgenden Formeln I bis VI enthalten:

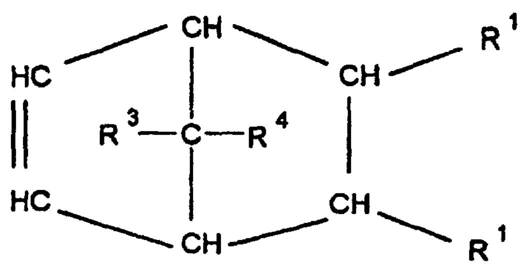

(I),

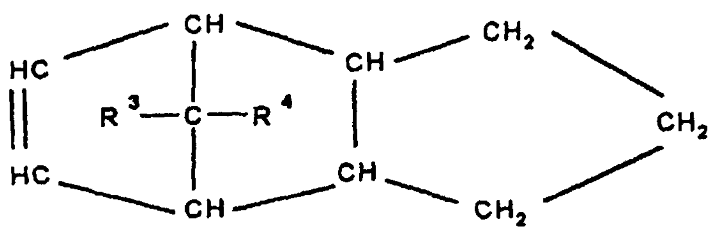

(II),

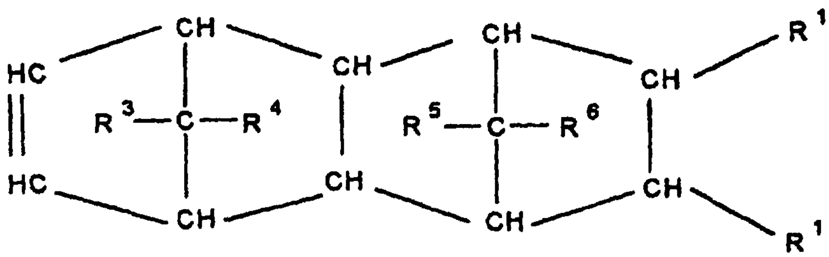

(III),

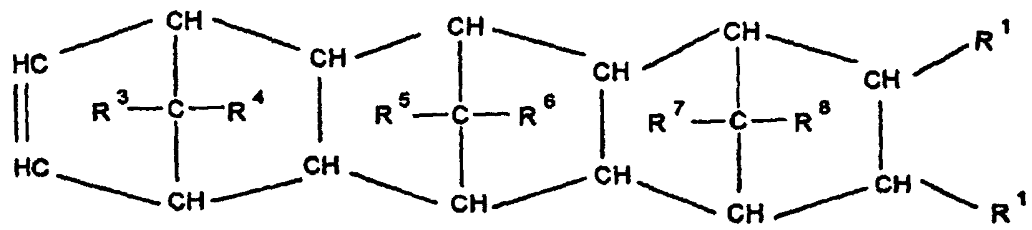

(IV),

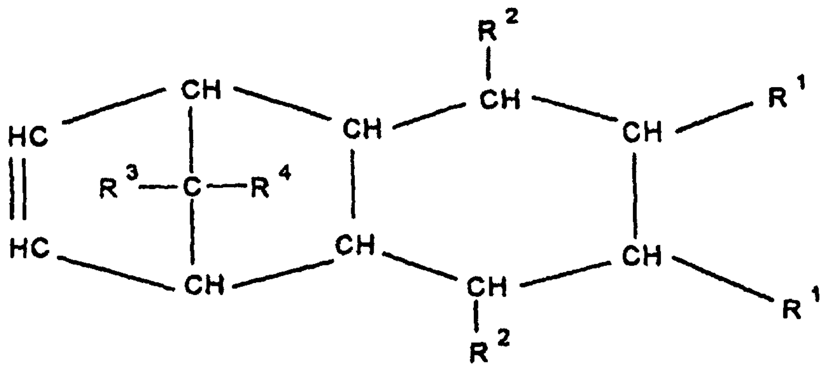

(V),

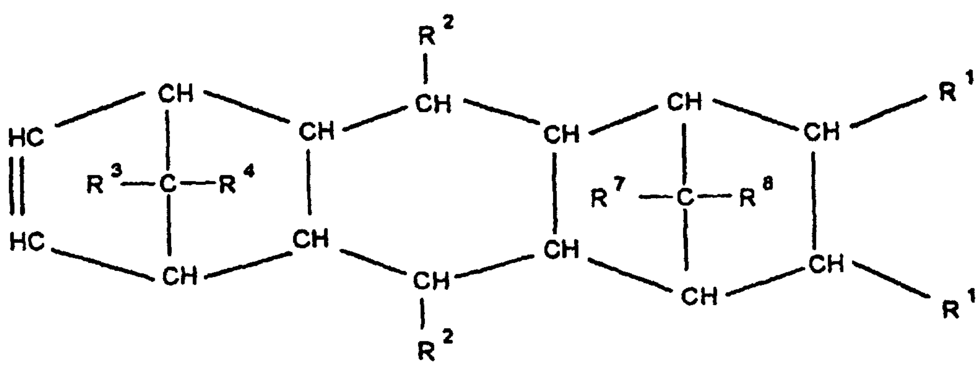

(VI),

Die Reste $R^1$ bis $R^8$ der Formeln I bis VI können gleich oder verschieden sein und H, $C_6$-$C_{20}$-Aryl, $C_1$-$C_{20}$-Alkyl, F, Cl, Br, J oder ein monocyclisches Olefin der folgenden Formel VII bedeuten,

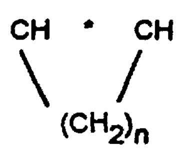

(VII)

worin n eine Zahl von 2 bis 10 ist.

Die Herstellung der Cycloolefinpolymeren erfolgt vorzugsweise mit Hilfe von Übergangsmetallkatalysatoren, die in den vorstehend genannten Schriften beschrieben sind. Darunter sind die Herstellverfahren gemäß EP-A-0 407 870 und EP-A-0 485 893 bevorzugt.

Cycloolefinpolymere, die ein mittleres bis höheres Molekulargewicht im Bereich von 1 000 bis 200 000, vorzugsweise 2 000 bis 180 000, insbesondere 3 000 bis 150 000, haben, sind bevorzugt. Die Regulierung des Molekulargewichts erfolgt bei der Herstellung durch den Einsatz von Wasserstoff, eine gezielte Auswahl des Katalysators und der Reaktionsbedingungen.

Zur Herstellung der partikelförmigen Hohlkörper ist insbesondere das an sich bekannte Sprühtrocknungsverfahren geeignet, bei welchem die unverträglichen Polymeren in einem geeigneten Lösungsmittel oder Lösungsmittelgemisch gelöst werden und die Lösung einer Sprühtrocknung unterworfen wird. Gegebenenfalls können auch andere Verfahren, z. B. Emulsionsverfahren oder Fällungsverfahren, zur Herstellung der erfindungsgemäßen Partikel eingesetzt werden (M. Bornschein et al, Die Pharmazie, 44, Heft 9, 1989, S. 585 ff.; Y. Kawashima et al, J. Pharm. Sciences, 81, Heft 2, 1992, S. 135 ff.).

Die Herstellung der Partikel mittels Sprühtrocknung ist bevorzugt und erfolgt beispielsweise nach dem Prinzip der Düsenversprühung. Bevorzugt ist eine Düsenversprühung im Gleichstrom, bei welcher die Richtung der versprühten Lösung und die Richtung des Luft- oder Gasstroms gleich sind. Für die Herstellung der Partikel nach diesem Verfahren haben sich beispielsweise Sprühtrockner der Firma Büchi bewährt, z. B. Büchi 190 (Büchi GmbH, Eislingen).

Bei der Sprühtrocknung wird eine Lösung, Emulsion oder Dispersion eines Polymeren (Sprühgut) mit einer Förderpumpe in eine Kammer eingespeist und in einem Luft- oder Gasstrom so versprüht, daß das Lösungsmittel ganz oder teilweise entfernt wird und sich die flüssigen Lösungströpfchen dabei in feste Partikel umwandeln. Diese Partikel werden mit dem Luft- oder Gasstrom in einen Abscheider z.B. in Form eines Zyklons geführt und abgeschieden.

Der Luft- oder Gasstrom wird mit Hilfe eines Aspirators so durch das Gerät hindurch gesaugt, daß dabei ein Unterdruck in der Kammer erzeugt wird. Mit der Regulierung der Aspiratorleistung wird einerseits die aufgeheizte Luft- oder Gasmenge und andererseits der in der Apparatur herrschende Unterdruck reguliert. Die hindurchgesaugte Luft- oder Gasmenge kann am Gerät im Bereich von 100 800 Nl/h eingestellt werden (Nl = Normalliter) und wird auch als Sprühflow bezeichnet. Vorzugsweise liegt der Sprühflow im Bereich von 500 - 800 Nl/h. Der eingestellte Unterdruck liegt im allgemeinen im Bereich von 10 - 100 mbar, vorzugsweise 30 - 70 mbar, unterhalb des Drucks außerhalb der Apparatur.

Damit das Lösungsmittel beim Versprühen während der zur Verfügung stehenden Kontaktzeit verdampft, muß die Temperatur des Luft- oder Gasstroms über oder in der Nähe des Siedepunktes des Lösungsmittels liegen. Diese Temperatur des durchgesaugten Luft- oder Gasstroms bezeichnet man als Eingangstemperatur. Die Eingangstemperatur kann innerhalb weiter Grenzen variieren und hängt im wesentlichen vom verwendeten Lösungsmittel und Polymer ab. Im allgemeinen liegt sie im Bereich von 15 - 250 °C, vorzugsweise 60 -250 °C, insbesondere 100 bis 210 °C.

Die Ausgangstemperatur ist die Temperatur des Luft- oder Gasstroms mit den abgeschiedenen Partikeln vor dem Eintritt in den Zyklon. Diese Ausgangstemperatur resultiert aus der Eingangstemperatur, Aspiratoreinstellung, Einstellung der Förderpumpe sowie aus der Konzentration der Sprühlösung und der Verdampfungswärme des Lösungsmittels. Sie liegt im allgemeinen im Bereich von 50 - 180 °C, vorzugsweise 60 bis 120 °C. Sie ist im allgemeinen niedriger als die Eingangstemperatur.

Für die Förderpumpe, die das Sprühgut in das Gerät einspeist, haben sich Pumpenleistungen von 100 bis 500 ml/h bewährt, insbesondere 120 bis 360 ml/h

Als Lösungsmittel oder Lösungsmittelgemische zur Herstellung der Polymerlösung, -emulsion oder -dispersion eignen sich beispielsweise Wasser, Tetrahydrofuran, Dichlormethan, Toluol, Dekalin, Petrolether, Furan, DMSO (Dimethylsulfoxid), Dioxan, Aceton und/oder aromatische und aliphatische Kohlenwasserstoffe bzw. Gemische dieser Lösungsmittel. Die Polymerlösung, -emulsion oder -dispersion enthält im allgemeinen 0,2 bis 25 Gew.-%, vorzugsweise 1 - 15 Gew.-%, insbesondere 3 - 8 Gew.-% Polymer, jeweils bezogen auf das Gewicht der Lösung. Gegebenenfalls kann die Polymerlösung weitere Additive in jeweils wirksamen Mengen enthalten, beispielsweise Emulgatoren.

In Abhängigkeit von den jeweiligen Verfahrensparametern erhält man eher kugelförmige Hohlkörper mit wenigen oder keinen konkaven Oberflächensegmenten oder stark deformierte Teilchen. Kugelförmige Hohlkörper erhält man wenn die Eingangstemperatur nahe des Siedepunkts des Lösungsmittels oder darunter liegt und gleichzeitig oberhalb oder nahe der $T_G$ des gelösten Polymeren. Unter diesen Bedingungen wird das Lösungsmittel langsam entfernt und die Ausbildung der Kugelform begünstigt. In Umkehrung dieses Prinzips erhält man bei Eingangstemperaturen, die über dem Siedepunkt des Lösungsmittels und unterhalb der $T_G$ des Polymeren liegen, stark deformierte Teilchen mit zahlreichen konkaven Oberflächensegmenten.

Die erfindungsgemäße Mehrschichtfolie umfaßt die vorstehend beschriebene Basisschicht und mindestens eine siegelfähige Deckschicht mit den vorstehend beschriebenen Hohlkörpern als Antiblockmittel sowie gegebenenfalls weitere Schichten. Bevorzugt sind dreischichtige Ausführungsformen, welche auf beiden Seiten der Basisschicht eine Deckschicht aufweisen, welche bezüglich ihrer Dicke und Zusammensetzung gleich oder verschieden sein können. Daneben sind vier- oder fünfschichtige Ausführungsformen bevorzugt, welche die Basisschicht und auf einer oder beiden Seite/n der Basisschicht aufgebrachte Zwischenschicht/en und beidseitige Deckschichten aufweisen.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 250 µm, insbesondere 10 bis

100 µm, wobei die Basisschicht etwa mindestens 40 %, vorzugsweise 50 bis 90 %, der Gesamtfoliendicke ausmacht.

Die Dicke der Deckschicht/en ist größer als 0,2 µm und liegt vorzugsweise im Bereich von 0,3 bis 5 µm, insbesondere größer als 0,5 bis 2 µm, wobei beidseitige Deckschichten gleich oder verschieden dick sein können.

Die Dicke der gegebenenfalls vorhandenen Zwischenschicht/en beträgt jeweils unabhängig voneinander 1 bis 12 µm, wobei Zwischenschichtdicken von 2 bis 8 µm, insbesondere 3 bis 6 µm, bevorzugt sind. Die angegebenen Werte beziehen sich jeweils auf eine Zwischenschicht.

Neben den partikelförmigen Hohlkörpern kann sowohl die Deckschicht als auch eine der anderen vorhandenen Schichten zusätzlich Neutralisationsmittel, Stabilisatoren, Gleitmittel, Kohlenwasserstoffharze und/oder Antistatika enthalten. Die nachstehenden Angaben in Gewichtsprozent beziehen sich auf das Gewicht der jeweiligen Schicht, der das Additiv zugesetzt ist.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 $m^2/g$. Im allgemeinen wird das Neutralisationsmittel in einer Menge von 0,02 bis 0,1 Gew.-% zugesetzt.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Die Kohlenwasserstoffharze werden bevorzugt der Basisschicht und/oder der/den Zwischenschicht/en zugesetzt. Die wirksame Menge an niedrigmolekularem Harz beträgt 1 bis 20 Gew.-%, vorzugsweise 2 bis 10 Gew.-%, bezogen auf die Schicht.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C, bestimmt nach ASTM E-28. Unter den zahlreichen niedrigmolekularen Harzen sind die Kohlenwasserstoffharze bevorzugt, und zwar in Form der Erdölharze (Petroleumharz), Styrolharze, Cyclopentadienharze und Terpenharze (diese Harze sind in Ullmanns Encyklopädie der technischen Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%. Als Antistatikum ist weiterhin Glycerinmonostearat bevorzugt.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird wie beim Coextrusionsverfahren üblich das Polymere bzw. die Polymermischung der einzelnen Schichten zusammen mit den partikelförmigen Hohlkörpern in einem Extruder komprimiert und verflüssigt, wobei die partikelförmigen Hohlkörper sowie die gegebenenfalls zugesetzten Additive bereits im Polymer bzw. in der Polymermischung enthalten sein können oder via Masterbatch-Technik zugegeben werden. Die den einzelnen Schichten der Folie entsprechenden Schmelzen werden dann gleichzeitig durch eine Flachdüse (Breitschlitzdüse) coextrudiert, und die ausgepreßte mehrschichtige Folie wird auf einer oder mehreren Abzugswalzen abgezogen, wobei sie abkühlt und sich verfestigt. Es hat sich als besonders günstig erwiesen, die Abzugswalze oder -walzen, durch die die ausgepreßte Folie auch abgekühlt und verfestigt wird, bei einer Temperatur von 20 bis 90 °C zu halten.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 7:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Temperaturen, bei denen Längs- und Querstreckung durchgeführt werden, können variieren.

Im allgemeinen wird die Längsstreckung vorzugsweise bei 100 bis 150 °C und die Querstreckung vorzugsweise bei 155 bis 190 °C durchgeführt.

An die biaxiale Streckung der Folie schließt sich ihre Thermofixierung (Wärmebehandlung) an, wobei die Folie etwa 0,5 bis 10 s lang bei einer Temperatur von 100 bis 160 °C gehalten wird. Anschließend wird die Folie in üblicher Weise mit einer Aufwickeleinrichtung aufgewickelt.

Die erfindungsgemäßen Folien weisen Dichten von maximal 1,7 g/$cm^3$, vorzugsweise 0,4 bis 1,5 g/$cm^3$ auf Gegebenenfalls kann/können nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekü-len der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die partikelförmigen Hohlkörper werden entweder in Reinform oder als granuliertes Konzentrat (Masterbatch) in die Deckschicht bzw. Deckschichten der Folie eingearbeitet, indem das Polyolefingranulat oder -pulver der Deckschicht/en mit den partikelförmigen Hohlkörpern vorgemischt und anschließend dem Extruder zugeführt wird. Im Extruder werden die Komponenten weiter vermischt und auf Verarbeitungstemperatur erwärmt. Im allgemeinen liegt die Extrusionstemperatur für die Deckschichtlen unterhalb der Glastemperatur und der Vicat-Erweichungstemperatur des Polymeren des Hohlkörpers. Im allgemeinen liegt die Extrusionstemperatur für die Deckschicht/en mindestens 10 °C, vorzugsweise 15 bis 180 °C, insbesondere 20 bis 150 °C, unter der $T_G$ bzw. der $T_V$ des Polymeren des Hohlkörpers.

Die partikelförmigen Hohlkörper liegen in der Deckschicht in Form von feinverteilten Teilchen vor. Sie wirken als Antiblockmittel.

Die erfindungsgemäße Folie ist gegenüber bekannten Folien mit niedrigem Reibungskoeffizienten in ihrem Glanz und in ihrer Trübung verbessert und zeichnet sich ebenfalls durch einen niedrigen Reibungskoeffizienten und durch eine niedrige Oberflächenrauhigkeit aus. Der Gleitreibungskoeffizient von gleitmittelfreien Ausführungsformen der erfindungsgemäßen Folien liegt im allgemeinen im Bereich von 0,3 bis 0,7, vorzugsweise 0,3 bis 0,5. Folien, welche zusätzlich ein Gleitmittel wie z. B. Fettsäureamid, insbesondere Erucasäureamid, enthalten, haben einen noch weiter erniedrigten Gleitreibungskoeffizienten. Dieser liegt bei der erfindungsgemäßen Folie mit Erucasäureamid in der Basisschicht im allgemeinen im Bereich von 0,05 bis 0,3, vorzugsweise 0,1 bis 0,2. Der Glanz der erfindungsgemäßen Folie liegt im Bereich von 90 bis 130, vorzugsweise 105 bis 130. Die Trübung der transparenten Ausführungsformen liegt im Bereich von 0,9 bis 3,0, vorzugsweise im Bereich von 0,9 bis 2,0.

Die erfindungsgemäßen Mehrschichtfolien können als Verpackungsfolien eingesetzt werden sowie bedruckt oder kaschiert werden.

Die erfindungsgemäßen Mehrschichtfolien können zur Herstellung von Laminaten mit Papier oder Pappe oder weiteren Folien aus thermoplastischem Kunststoff eingesetzt werden.

Die Erfindung wird nun anhand von Ausführungsbeispielen noch näher erläutert.

A. Herstellung des inkompatiblen Polymeren

Beispiel 1

Ein sauberer und trockener 1,5 $dm^3$-Polymerisationsreaktor mit Rührer wurde mit Stickstoff und dann mit Ethylen gespült und mit einer Lösung von 712 g Norbornen in 150 $cm^3$ Toluol gefüllt. Unter Rühren wurde dann der Reaktor auf eine Temperatur von 90 °C gebracht und 1 bar Ethylen aufgedrückt.

Danach wurden 5 $cm^3$ toluolische Methylaluminoxanlösung (10,1 Gew.-% Methylaluminoxan mit einer Molmasse von 1300 g/mol nach kryoskopischer Bestimmung) in den Reaktor dosiert und die Mischung 15 min bei 90 °C gerührt, wobei durch Nachdosieren der Ethylendruck bei 1 bar gehalten wurde (Sättigung der Lösung mit Ethylen). Parallel dazu wurden 5,5 mg Isopropylen(cyclopentadienyl)(1-indenyl)zirkondichlorid, in 5 $cm^3$ toluolischer Methylaluminoxanlösung (Konzentration und Qualität siehe oben) gelöst und durch 15 minütiges Stehenlassen voraktiviert. Dann

wurde die Lösung des Komplexes in den Reaktor dosiert. Unter Rühren (750 Upm) wurde dann 2 Stunden bei 90 °C polymerisiert, wobei der Ethylendruck durch Nachdosieren bei 1 bar gehalten wurde. Dann wurde der Reaktorinhalt schnell in ein Rührgefäß abgelassen, in dem 10 $cm^3$ Isopropanol vorglegt waren. Diese Mischung wurde in 2 $dm^3$ Aceton eingetropft und dann der suspendierte polymere Feststoff abfiltriert. Das abfiltrierte Polymer wurde dann in 1000 $cm^3$ einer Mischung aus zwei Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80 °C und 0,2 bar 15 Stunden getrocknet. Es wurde eine Produktmenge von 165 g erhalten. An dem Produkt wurde eine Glastemperatur $T_g$ von 276 °C gemessen. Die Viskositätszahl betrug 52 ml/g.

B. Herstellung der partikelförmigen Hohlkörper

Beispiele 2

In einem Sprühtrockner (Mini Spray Dryer, Büchi 190) wird das Polymer aus Beispiel 1 in toluolischer Lösung wie nachfolgend beschrieben unter folgenden Bedingungen versprüht.

| | |
|---|---|
| Flow-Rate ($N_2$) | 500 Nl/h |
| Förderpumpenrate | 4 ml/min |
| Aspirator | 10 |
| $N_2$-Vordruck | 150 mbar |
| Filterdruck | 32,5 mbar |

3%ige Lösung des Polymeren aus Beispiel 1 in Toluol
Eingangstemperatur: 130 °C, Ausgangstemperatur: 85 °C
mittlerer Durchmesser der resuspendierten Partikel $d_n$ = 4 µm; $d_w/d_n$ = 1,7

C. Herstellung der erfindungsgemäßen Folien

Beispiel 3

Es wurde durch Coextrusion und anschließende stufenweise Orientierung in Längs- und Querrichtung eine dreischichtige Folie mit einer Gesamtdicke von 20 µm und einem ABA-Schichtaufbau hergestellt, d. h. die Basisschicht B war von zwei gleichen Deckschichten A umgeben.

Die Folie wurde vor der Aufrollung auf der Walzenseite einer einseitigen Coronabehandlung unterzogen. Die Walzenseite ist diejenige Seite der Folie, mit der sie auf der ersten Abzugswalze aufliegt. Die Oberflächenspannung betrug auf dieser Seite infolge dieser Behandlung 39 bis 40 mN/m. Alle Schichten enthielten zur Stabilisierung 0,13 Gew.-% Pentaerythrityl-Tetrakis-4-(3,5-ditertiärbutyl-4-hydroxyphenyl)-propionat (®Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 4 Gew.-% und einem Schmelzbereich von 160 bis 162 °C. Der Schmelzflußindex des Polypropylenhomopolymeren betrug 3,4 g/10 min bei 230 °C und 21,6 N Belastung (DIN 53 735). Die Basisschicht enthielt 0,12 Gew.-% Erucasäureamid mit einem Schmelzbereich von 78 bis 82 °C und 0,12 Gew.-% N,N-bis-Ethoxyalkylamin (®Armostat 300).

Die polyolefinischen Deckschichten bestanden im wesentlichen aus einem Ethylen-Propylen-Buten-1-Terpolymeren mit einem Gehalt von 3,5 Gew.-% Ethylen, 88,5 Gew.-% Propylen und 8 Gew.-% Buten-1. Die Deckschichten enthielten 0,05 Gew.-% der in Beispiel 2 beschriebenen partikelförmigen Hohlkörper. Die Dicke der Deckschichten betrug jeweils 0,8 µm.

Beispiel 4

Beispiel 3 wurde wiederholt. Die Deckschicht enthielt jedoch 0,15 Gew.-% der in Beispiel 2 hergestellten partikelförmigen Hohlkörper.

Vergleichsbeispiel 1

Beispiel 3 wurde wiederholt. Als Antiblockmittel wurden jedoch 0,15 Gew.-% eines vernetzten Siliconharzpulvers mit einem mittleren Teilchendurchmesser von 2 µm (®Tospearl 20 der Firma Toshiba Silicone Co., Ltd.) eingesetzt.

Vergleichsbeispiel 2

Beispiel 3 wurde wiederholt. Als Antiblockmittel wurden jedoch 0,15 Gew.-% eines organisch gecoateten Siliciumdioxids mit einem mittleren Teilchendurchmesser von 2 µm (®Sylobloc 44 der Firma Grace) eingesetzt.

Vergleichsbeispiel 3

Vergleichsbeispiel 1 wurde wiederholt. Die Deckschicht enthielt jedoch 0,33 Gew.-% des Siliconharzpulvers.

Vergleichsbeispiel 4

Vergleichsbeispiel 2 wurde wiederholt. Die Deckschicht enthielt jedoch 0,33 Gew.-% des gecoateten Siliciumdioxids.

Die Eigenschaften der Folien gemäß den Beispielen und Vergleichsbeispielen sind in der nachstehenden Tabelle zusammengefaßt.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Bestimmung der Siegelanspringtemperatur

Mit dem Siegelgerät HSG/ET der Firma Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 1,5 N/mm$^2$ (Gerät: Brugger Typ NDS, einseitig beheizte Siegelbacke) versiegelt. Die Siegelnahtfestigkeit wurde nach der T-Peel-Methode bestimmt.

Reibung

Die Reibung wurde in Anlehnung an DIN 53 375 bestimmt. Die Gleitreibungszahl wurde 14 Tage nach der Produktion gemessen.

Oberflächenspannung

Die Oberflächenspannung wurde mittels der sogenannten Tintenmethode (DIN 53 364) bestimmt.

Rauhigkeit

Die Rauhigkeit wurde nach DIN 4768 bei einem Cut-off von 0,25 mm bestimmt.

Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegen-den Folienlagen gemessen und anstelle einer 4°-Lochblende eine 1°-Spaltblende eingesetzt wurde.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportio-nale elektrische Größe angezeigt. Der Meßwert ist dimensionslos und muß mit dem Einstrahlwinkel angegeben werden.

Dichte

Die Dichte wird nach DIN 53 479, Verfahren A, bestimmt.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Lichtdurchlässigkeit

Die Lichtdurchlässigkeit wird in Anlehnung an ASTM-D 1003-77 gemessen.

Mittleres Molekulargewicht und Molmassen-Dispersität

Die mittleren Molmassen ($M_w$,$M_n$) und die mittlere Molmassen-Dispersität ($M_w/M_n$) wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtempera-tur nicht löslich sind, wird die gesamte Messung bei erhöhter Temperatur (~135 °C) durchgeführt.

Glastemperatur

Die Proben wurden mit Hilfe der DSC (Difference-Scanning-Calometry) untersucht. Die Aufheizgeschwindigkeit betrug 20 K/min. Um die thermische Vorgeschichte in der Probe zu eliminieren, wurde die Probe im DSC-Gerät zunächst über die Glastemperatur $T_G$ erhitzt, rasch abgekühlt und dann erneut erhitzt (zweites Aufheizen). Aus dem Thermogramm für das zweite Aufheizen wurde die Temperatur für den Glasübergang als halbe Stufenhöhe entnommen.

Vicat-Erweichungstemperatur

Die Vicat-Erweichungstemperatur VST/B/120 wurde nach 150 306, DIN 53 460 gemessen.

Photonenkorrelationsspektroskopie

Die Messung wurde wie in J.P. Fischer "Progress in Kolloid and Polymer Science, 77, Seite 180 - 194, 1988, beschrieben durchgeführt.

Partikelgrößenverteilung

Das Zahlenmittel $d_n$ und Gewichtsmittel $d_w$ der Partikelgröße werden aus der mittels PCS bestimmten Partikelgrößenverteilung nach gängigen mathematischen Verfahren bestimmt.

## TABELLE

| | Glanz | | Trübung | | Siegelanspringtemperatur MST [°C] 10 N/$cm^2$; 0,5 s | | Gleitreibungszahl | Rauhigkeit | |
|---|---|---|---|---|---|---|---|---|---|
| | Meßwinkel 20° | Meßwinkel 60° | Hölz 4lagig | ASTM-D 1003 1lagig | A ./. A | B ./. B | A ./. B | A ./. A | B ./. B |
| B3 | 120 | 145 | 22 | 1,4 | 112 | 118 | 0,18 | 0,65 | 0,51 |
| B4 | 115 | 140 | 25 | 1,8 | 114 | 120 | 0,17 | 0,70 | 0,78 |
| VB1 | 108 | 135 | 39 | 3,9 | 116 | 120 | 0,17 | 0,55 | 0,58 |
| VB2 | 105 | 135 | 35 | 3,5 | 112 | 118 | 0,32 | 1,1 | 1,23 |
| VB3 | 102 | 133 | 43 | 4,2 | 116 | 120 | 0,17 | 0,60 | 0,77 |
| VB4 | 102 | 128 | 41 | 3,7 | 116 | 120 | 0,3 | 1,3 | 1,45 |

B = Beispiel
VB = Vergleichsbeispiel
A = Walzenseite
B = Luftseite

**Patentansprüche**

1. Orientierte Folie aus Polyolefin, die mindestens eine polyolefinische Basisschicht und eine polyolefinische siegelfähige Deckschicht enthält, **dadurch gekennzeichnet, daß** die siegelfähige Deckschicht 70 bis < 100 Gew.% eines Polyolefins und partikelförmige Hohlkörper als Antiblockmittel enthält, die im wesentlichen aus Polymer bestehen, das mit dem Polyolefin der Deckschicht inkompatibel ist, und daß die Basisschicht 60 bis 100 Gew.-%, vorzugsweise 70 bis 99 Gew.-%, eines Polyolefins, jeweils bezogen auf das Gewicht der Basisschicht, enthält.

2. Folie nach Anspruch 1, **dadurch gekennzeichnet, daß** das Polyolefin der siegelfähigen Deckschicht ein Polymer aus Olefinen mit 2 bis 10 Kohlenstoffatomen ist.

3. Folie nach einem oder mehreren der Ansprüche 1 bis 2, **dadurch gekennzeichnet, daß** die Deckschicht maximal 5 Gew.-%, vorzugsweise 0,001 bis 3 Gew.-%, bezogen auf das Gewicht der Deckschicht, partikelförmige Hohlkörper enthält.

4. Folie nach einem oder mehreren der Ansprüche 1 bis 3, **dadurch gekennzeichnet, daß** die partikelförmigen Hohlkörper im wesentlichen kugelförmig sind und im wesentlichen keine konkaven Oberflächensegmente aufweisen.

5. Folie nach einem oder mehreren der Ansprüche 1 bis 3, **dadurch gekennzeichnet, daß** die partikelförmigen Hohlkörper 1 bis 20 konkave Oberflächensegmente haben.

6. Folie nach Anspruch 5, **dadurch gekennzeichnet, daß** das im Hohlkörper eingeschlossene Volumen gegen null geht und der Hohlkörper im wesentlichen aus Polymerhaut besteht.

7. Folie nach einem oder mehreren der Ansprüche 1 bis 6, **dadurch gekennzeichnet, daß** mindestens 90 % der Hohlkörper einen maximalen Teilchendurchmesser im Bereich von 0,2 bis 20 µm, vorzugsweise 1 bis 15 µm, aufweisen.

8. Folie nach einem oder mehreren der Ansprüche 1 bis 7, **dadurch gekennzeichnet, daß** das inkompatible Polymere syndiotaktisches Polystyrol, Polyphenylensulfid (PPS), Polyetherketon (PEK), Polyamid (PA), Polyethylenterephthalat (PET), Polybutylenterephthalat (PBT), Polyaramid, Polyimid, halogeniertes Polymer, amorphes oder teilkristallines Cycloolefinpolymer sowie Methathesepolymer ist.

9. Folie nach einem oder mehreren der Ansprüche 1 bis 8, **dadurch gekennzeichnet, daß** die Basisschicht Pigmente, vorzugsweise $TiO_2$, und/oder vakuoleniniziierende Füllstoffe enthält.

10. Folie nach einem oder mehreren der Ansprüche 1 bis 9, **dadurch gekennzeichnet, daß** die Dichte der Folie maximal 1,7 $g/cm^3$, vorzugsweise 0,4 bis 1,5 $g/cm^3$, beträgt.

11. Verfahren zur Herstellung einer Folie nach Anspruch 1, bei welchem die die Folie bildenden Polymeren und/oder Polymermischungen in einem Extruder komprimiert und erwärmt werden, anschließend die Schmelze/n durch eine Flachdüse extrudiert werden, die so erhaltene Folie auf einer oder mehreren Walzen abgezogen wird, die Folie anschließend orientiert und gegebenenfalls thermofixiert und oberflächenbehandelt wird, **dadurch gekennzeichnet, daß** die Extrusionstemperatur unter der Glastemperatur des inkompatiblen Polymeren liegt.

12. Polyolefin-Mehrschichtfolie nach einem der Ansprüche 1 bis 10, **dadurch gekennzeichnet, daß** die Deckschichten eine Dicke von 0,2 bis 2 µm aufweisen.

13. Polyolefin-Mehrschichtfolie nach einem der Ansprüche 1 bis 10 und 12, **dadurch gekennzeichnet, daß** die weiße und/oder opake Ausführungsform der Mehrschichtfolie eine Lichtdurchlässigkeit, gemessen nach ASTM-D 1039-77, von höchstens 50 % hat.

14. Verwendung einer Polyolefin-Mehrschichtfolie nach einem oder mehreren der Ansprüche 1 bis 10 und 12 bis 13 als Verpackungsfolie.

15. Verwendung einer Polyolefin-Mehrschichtfolie nach einem oder mehreren der Ansprüche 1 bis 10 zur Bedruckung und Kaschierung.

16. Verwendung einer Polyolefin-Mehrschichtfolie nach einem oder mehreren der Ansprüche 1 bis 10 zur Herstellung eines laminzts mit Papier oder Pappe oder weiterer Folie aus thermoplastischem Kunststoff.

17. Verwendung von partikelförmigen Hohlkörpern als Antiblockmittel in orientierten Folien aus Polyolefin.

## Claims

1. An oriented polyolefin film which contains at least one polyolefinic base layer and one sealable polyolefinic top layer, wherein the sealable top layer contains from 70 to < 100% by weight of a polyolefin and, as antiblocking agent, hollow particles which comprise essentially a polymer which is incompatible with the polyolefin of the top layer, and wherein the base layer contains from 60 to 100% by weight, preferably from 70 to 99% by weight, of a polyolefin, based in each case on the weight of the base layer.

2. The film as claimed in claim 1, wherein the polyolefin of the sealable top layer is a polymer of olefins having 2 to 10 carbon atoms.

3. The film as claimed in one or both of claims 1 and 2, wherein the top layer contains not more than 5% by weight, preferably from 0.001 to 3% by weight, based on the weight of the top layer, of hollow particles.

4. The film as claimed in one or more of claims 1 to 3, wherein the hollow particles are essentially spherical and have essentially no concave surface segments.

5. The film as claimed in one or more of claims 1 to 3 3, wherein the hollow particles have from 1 to 20 concave surface segments.

6. The film as claimed in claim 5, wherein the volume enclosed in the hollow particle tends toward zero and the hollow particle comprises essentially polymer skin.

7. The film as claimed in one or more of claims 1 to 6, wherein at least 90% of the hollow particles have a maximum particle diameter in the range from 0.2 to 20 µm, preferably from 1 to 15 µm.

8. The film as claimed in one or more of claims 1 to 7, wherein the incompatible polymer is syndiotactic polystyrene, polyphenylene sulfide (PPS), polyetherketone (PEK), polyamide (PA), polyethylene terephthalate (PET), polybutylene terephthalate (PBT), polyaramid, polyimide, halogenated polymer, amorphous or semicrystalline cycloolefin polymer or a metathetical polymer.

9. The film as claimed in one or more of claims 1 to 8, wherein the base layer contains pigments, preferably $TiO_2$, or vacuole-initiating fillers.

10. The film as claimed in one or more of claims 1 to 9, wherein the density of the film is not more than 1.7 $g/cm^3$, preferably from 0.4 to 1.5 $g/cm^3$.

11. A process for the production of a film as claimed in claim 1, in which the polymers or polymer mixtures forming the film are compressed and heated in an extruder, the melt or melts is or are then extruded through a sheet die, the film thus obtained is drawn off on one or more rolls and the film is then oriented and, if required, heat-set and surface-treated, wherein the extrusion temperature is below the glass transition temperature of the incompatible polymer.

12. A multilayer polyolefin film as claimed in any of claims 1 to 10, wherein the top layers have a thickness of from 0.2 to 2 µm.

13. The multilayer polyolefin film as claimed in any of claims 1 to 10 and 12, wherein the white or opaque embodiment of the multilayer film has a light transmittance, measured according to ASTM-D 1039-77, of not more than 50%.

14. The use of a multilayer polyolefin film as claimed in one or more of claims 1 to 10 and 12 and 13 as packaging films.

15. The use of a multilayer polyolefin film as claimed in one or more of claims 1 to 10 for printing and lamination.

16. The use of a multilayer polyolefin film as claimed in one or more of claims 1 to 10 for producing a laminate with paper or board or a further film of a thermoplastic.

17. The use of hollow particles as antiblocking agents in oriented polyolefin films.

**Revendications**

1. Feuille orientée en polyoléfine, qui contient au moins une couche de base en polyoléfine et une couche de recouvrement scellable en polyoléfine, **caractérisée en ce que** la couche de recouvrement scellable contient 70 à <100% en poids d'une polyoléfine et des corps creux en forme de particules comme agents d'anti-blocage, qui sont essentiellement constitués de polymère incompatible avec la polyoléfine de la couche de recouvrement et **en ce que** la couche de base contient 60 à 100% en poids, de préférence 70 à 99% en poids, d'une polyoléfine à chaque fois par rapport au poids de la couche de base.

2. Feuille selon la revendication 1, **caractérisée en ce que** la polyoléfine de la couche de recouvrement scellable est un polymère constitué d'oléfines comprenant 2 à 10 atomes de carbone.

3. Feuille selon l'une ou plusieurs des revendications 1 à 2, **caractérisée en ce que** la couche de recouvrement contient au maximum 5% en poids, de préférence 0,001 à 3% en poids, par rapport au poids de la couche de recouvrement, de corps creux en forme de particules.

4. Feuille selon l'une ou plusieurs des revendications 1 à 3, **caractérisé en ce que** les corps creux en forme de particules sont essentiellement sphériques et ne présentent essentiellement pas de segments de surface concaves.

5. Feuille selon l'une ou plusieurs des revendications 1 à 3, **caractérisée en ce que** les corps creux en forme de particules présentent 1 à 20 segments de surface concaves.

6. Feuille selon la revendication 5, **caractérisée en ce que** le volume inclus dans le corps creux tend vers zéro et que le corps creux est essentiellement constitué d'une peau en polymère.

7. Feuille selon l'une ou plusieurs des revendications 1 à 6, **caractérisée en ce qu'**au moins 90% des corps creux présentent un diamètre maximal de particule dans la plage de 0,2 à 20 µm, de préférence de 1 à 15 µm.

8. Feuille selon l'une ou plusieurs des revendications 1 à 7, **caractérisée en ce que** le polymère incompatible est un polystyrène syndiotactique, un poly(sulfure de phénylène) (PPS), une polyéthercétone (PEC), un polyamide (PA), un poly(téréphtalate d'éthylène) (PET), un poly(téréphtalate de butylène) (PBT), un polyaramide, un polyimide, un polymère halogéné, un polymère de cyclooléfine amorphe ou partiellement cristallin ainsi qu'un polymère à métathèse.

9. Feuille selon l'une ou plusieurs des revendications 1 à 8, **caractérisée en ce que** la couche de base contient des pigments, de préférence du $TiO_2$ et/ou des charges initiant des vacuoles.

10. Feuille selon l'une ou plusieurs des revendications 1 à 9, **caractérisée en ce que** la masse volumique de la feuille est d'au maximum 1,7 $g/cm^3$, de préférence de 0,4 à 1,5 $g/cm^3$.

11. Procédé pour la fabrication d'une feuille selon la revendication 1, dans lequel les polymères et/ou les mélanges de polymères formant la feuille sont comprimés et chauffés dans une extrudeuse, la ou les masses fondues sont ensuite extrudées par une filière plate, la feuille ainsi obtenue est étirée sur un ou plusieurs cylindres, la feuille est ensuite orientée et, le cas échéant, thermofixée et traitée en surface, **caractérisé en ce que** la température d'extrusion est inférieure à la température de transition vitreuse du polymère incompatible.

12. Feuille multicouche de polyoléfine selon l'une quelconque des revendications 1 à 10, **caractérisée en ce que** les couches de recouvrement présentent une épaisseur de 0,2 à 2 µm.

13. Feuille multicouche en polyoléfine selon l'une quelconque des revendications 1 à 10 et 12, **caractérisée en ce que** la forme de réalisation blanche et/ou opaque de la feuille multicouche présente une transparence, mesurée

selon la norme ASTM-D 1039-77, d'au maximum 50%.

**14.** Utilisation d'une feuille multicouche en polyoléfine selon l'une ou plusieurs des revendications 1 à 10 et 12 à 13 comme feuille pour emballages.

**15.** Utilisation d'une feuille multicouche en polyoléfine selon l'une ou plusieurs des revendications 1 à 10 pour l'impression et le contrecollage.

**16.** Utilisation d'une feuille multicouche en polyoléfine selon l'une ou plusieurs des revendications 1 à 10 pour la fabrication d'un laminé avec du papier ou du carton ou autre feuille en matériau synthétique thermoplastique.

**17.** Utilisation de corps creux en forme de particules comme agents anti-blocage dans des feuilles orientées en polyoléfine.